# EUROPEAN PATENT APPLICATION

(11) **EP 1 263 214 A2**
(43) Date of publication of application: **04.12.2002**
(21) Application number: 02253590.0
(22) Date of filing: 22.05.2002
(51) Int. Cl.: H04N 5/225

(54) **Image-taking device**

(30) Priority: 22.05.2001 JP 2001153109
(71) Applicant: Sony Computer Entertainment Inc., Tokyo 107-0052 (JP)
(72) Inventor: Miura, Kazuo, Sony Computer Entertainment, Inc., Tokyo 107-0052 (JP)
(74) Representative: Turner, James Arthur

(57) **Abstract**

An image-taking device comprises a base, a supporting plate, an arm, a first rotating shaft linking the base and arm in a relatively rotatable manner, a second rotating shaft disposed generally parallel to a plane perpendicular to the first rotating shaft, for linking the supporting plate and arm in a relatively rotatable manner, an image-taking lens supported by the arm, a spindle motor for rotationally driving the supporting plate, and an electromagnetic linear actuator for rotationally driving the arm.

## Description

The present invention relates to image-taking devices.

A known example of a miniature-type image-taking device is an arrangement which can be attached to the display unit of a notebook type personal computer (see Japanese Unexamined Patent Application Publication No. 10-301718).

Many conventional miniature-type image-taking devices are attached to the main unit of a personal computer or the like as an accessory, and in most cases, are disposed within the reach of the user of the main unit. Accordingly, adjustment of the direction of incident light to the image-taking lens can be handled by the user directly moving the image-taking lens and changing the direction. Due to this reason, conventionally, there have been no miniature-type image-taking devices wherein adjustment of the direction of incident light to the image-taking lens can be performed without manual operations by the user.

Various respective aspects and features of the invention are defined in the appended claims. Features from the dependent claims may be combined with features of the independent claims as appropriate and not merely as explicitly set out in the claims.

According to a first aspect of the present invention, an image-taking device comprises: a base; a first rotating member; a second rotating member; a first rotating shaft linking the base and the first rotating member so as to be relatively rotatable; a second rotating shaft disposed generally parallel to a plane perpendicular as to the first rotating shaft, linking the first rotating member and the second rotating member so as to be relatively rotatable; an image-taking lens supported by the second rotating member; a first driving unit for rotationally driving the first rotating member; and a second driving unit for rotationally driving the second rotating member.

With the first aspect, the first rotating member is rotationally driven by the first driving unit, and the second rotating member by the second driving unit, and accordingly the optical axis direction of the image-taking lens can be set to a desired direction.

Further, according to the first aspect, the second driving unit is made up of an electromagnetic actuator disposed between the first rotating member and the second rotating member, and the second rotating shaft is disposed across an extended line (virtual line) of the axial center of the first rotating shaft.

With the first aspect configured thus, the second rotating shaft is disposed across an extended line of the axial center of the first rotating shaft, so mechanical precision is more readily ensured as compared to arrangements wherein the second rotating shaft is not on an extended line of the axial center of the first rotating shaft. In other words, with an arrangement wherein the second rotating shaft is disposed across an extended line of the axial center of the first rotating shaft, the degree of effect that the margin of error in assembling the second rotating shaft to the axial center of the first rotating shaft has on the optical axis direction of the image-taking lens can be suppressed to a smaller level as compared to an arrangement otherwise. Accordingly, due to the second rotating shaft being disposed across an extended line of the axial center of the first rotating shaft, high mechanical precision can be obtained at the time of changing the optical axis direction of the image-taking lens, thereby improving the precision of adjusting the optical axis direction of the image-taking lens. Also, the second driving unit is configured of an electromagnetic actuator, so an image-taking device that is suitable for miniaturization can be provided.

The second rotating member may comprise an arm having a one end linked to the second rotating shaft and an other end for supporting the image-taking lens. The electromagnetic actuator may comprise a coil which is fixed to the arm, having a hollow portion extending in a direction generally orthogonal to a plane containing the axial center of the second rotating shaft, a first yoke which is fixed to the first rotating member and is inserted through the hollow portion of the coil, a second yoke which is fixed to the first rotating member and is disposed so as to face the outer face of the coil following the path of motion of the coil, and a magnet which is fixed on the second yoke so as to face the outer face of the coil.

According to this arrangement, the structure of the second rotating member and the electromagnetic actuator is simplified, and the overall structure of the image-taking device is streamlined, which is suitable for miniaturization.

Here, the first rotating member may comprise a supporting plate for supporting the first yoke and the second yoke and the magnet, as well as supporting the arm through the second rotating shaft. The first driving unit may comprise a spindle motor fixed to the base. Also, the first rotating shaft may be extended linearly from the driving shaft of the spindle motor and be fixed to the supporting plate.

With the above configuration, a spindle motor is used as a first driving unit, and the first rotating shaft is extended linearly from the driving shaft of the spindle motor, so there is no need to provide a mechanism for transmitting driving force between the first driving unit and the first rotating shaft, and accordingly the structure is simplified, which is suitable for miniaturization.

The first rotating member may comprise a base plate and a supporting plate erected on the base plate, wherein the supporting plate supports the first yoke and the second yoke and the magnet, as well as supporting the arm through the second rotating shaft. The base may comprise an end wall having a hole and a side wall extending from the edge of the end wall. The first rotating shaft may extend from the base plate and be rotatably supported by the hole in the base. The first driving unit may comprise a driving force source fixed to the base and a driving force transmission mechanism for transmitting the driving force rotations of the driving force source to the first rotating shaft. The driving force source and the driving force transmission mechanism may be disposed on the inner side of the side wall. The base plate may be provided so as to cover the hole of the base.

With the above configuration, the driving force source of the first driving unit and the driving force transmission mechanism are disposed on the inner side of the side wall of the base, so the first driving unit is not exposed on the outer side of the base. Also, the base plate of the first rotating member is provided so as to cover the hole of the base, so the hole and the first rotating shaft are not exposed. Accordingly, the external view of the image-taking device is streamlined.

Also, the second rotating member may further comprise a balance weight which is fixed to one end of the arm and extends toward the opposite side of the image-taking lens.

According to this configuration, the load on the electromagnetic actuator is reduced by the balance weight, thereby permitting miniaturization of the electromagnetic actuator.

The image-taking device may further comprise: a cover which is fixed to the second rotating member, for covering the first and second rotating members and the second rotating shaft and the image-taking lens, the cover having an opening for opening the optical axis direction of the image-taking lens; and a shutter for opening and shutting the opening of the cover.

With the above configuration, the first and second rotating members and the second rotating shaft are unexposed at all times, and the image-taking lens is only exposed when the shutter is opened, so the external view of the image-taking device is even further streamlined.

According to a second aspect of the present invention, an image-taking device comprises: a base; a first rotating member; a second rotating member; a first rotating shaft linking the base and the first rotating member so as to be relatively rotatable; a second rotating shaft disposed generally parallel to a plane perpendicular as to the first rotating shaft, linking the first rotating member and the second rotating member so as to be relatively rotatable; an image-taking lens supported by the second rotating member; a first driving unit for rotationally driving the first rotating member; and a second driving unit for rotationally driving the second rotating member; wherein the base is formed in a generally-cylindrical form having an opening on at least one end; and wherein the first rotating shaft is formed in a generally-cylindrical form to rotationally move along the inner circumference of the base; and wherein the first rotating member extends from the first rotating shaft and protrudes from the opening of the base; and wherein the first driving unit and the second driving unit are both disposed within the base.

With this second aspect, the first driving unit and the second driving unit are disposed within the base and are not exposed, so the external view of the image-taking device is streamlined.

The second rotating member may comprise an outer circumference face which is disposed along an arc centered on the second rotating shaft and partially faces the inside of the base from the opening. The first driving unit may comprise a first driving force source fixed to the base and a first driving force transmission mechanism for transmitting the driving force rotations of the first driving force source to the first rotating member. The second driving unit may comprise a second driving force source fixed to the base and a second driving force transmission mechanism for transmitting the driving force rotations of the second driving force source to the outer circumference face of the second rotating member.

With such a configuration, the second rotating member has an outer circumference face which is disposed along an arc centered on the second rotating shaft, and the driving force rotations of the second driving force source are transmitted to the outer circumference face of the second rotating member, so the structure of the second driving force transmission mechanism is simplified, which is suitable for miniaturization of the image-taking device.

Also, the first rotating member and the second rotating member may overall form a generally spherical outer face.

According to a third aspect of the present invention, an image-taking device comprises: a base; a first rotating member; a second rotating member; a first rotating shaft linking the base and the first rotating member so as to be relatively rotatable; a second rotating shaft disposed generally parallel to a plane perpendicular as to the first rotating shaft, linking the first rotating member and the second rotating member so as to be relatively rotatable; an image-taking lens supported by the second rotating member; a first driving unit for rotationally driving the first rotating member; and a second driving unit for rotationally driving the second rotating member; wherein the first rotating shaft is formed in a cylindrical form and is rotatably supported by the base; and wherein the first rotating member is fixed to the first rotating shaft, and wherein the second rotating member comprises an outer circumference face which is disposed along an arc centered on the second rotating shaft; and wherein the first driving unit comprises a first driving force source fixed as to the base and a first driving force transmission mechanism for transmitting the rotational driving force of the first driving force source to the first rotating shaft; and wherein the second driving unit comprises a second driving force source fixed as to the base and a second driving force transmission mechanism for transmitting the rotational driving force of the second driving force source to the outer circumference face of the second rotating member; and wherein the second driving force transmission mechanism comprises a driving force transmission shaft which is inserted through the interior of the first rotating shaft.

With the third aspect, the first rotating shaft is formed in a cylindrical form, and the driving force transmission shaft of the second driving force transmission mechanism is inserted through the interior of the first rotating shaft and accordingly is not externally exposed, so the external view of the image-taking device is streamlined. Also, the second rotating member comprises an outer circumference face which is disposed along an arc centered on the second rotating shaft, and the a second driving force transmission mechanism transmits the rotational driving force of the second driving force source to the outer circumference face of the second rotating member, so the structure of the second driving force transmission mechanism is simplified, which is suitable for miniaturization of the image-taking device.

According to a fourth aspect of the present invention, an image-taking device comprises: a base; a first rotating member; a second rotating member; a first rotating shaft linking the base and the first rotating member so as to be relatively rotatable; a second rotating shaft disposed generally parallel to a plane perpendicular as to the first rotating shaft, linking the first rotating member and the second rotating member so as to be relatively rotatable; an image-taking lens supported by the second rotating member; a first driving unit for rotationally driving the first rotating member; and a second driving unit for rotationally driving the second rotating member; wherein the first rotating shaft is rotatably supported by the base; and wherein the first rotating member is fixed to the rotating shaft; and wherein the second rotating member comprises an outer circumference face which is disposed along an arc centered on the second rotating shaft; and wherein the first driving unit comprises a first driving force source fixed as to the base and a first driving force transmission mechanism for transmitting the rotational driving force of the first driving force source to the first rotating shaft; and wherein the second driving unit comprises a second driving force source fixed as to the first rotating member and a second driving force transmission mechanism for transmitting the rotational driving force of the second driving force source to the outer circumference face of the second rotating member.

With the fourth aspect, the second rotating member comprises an outer circumference face which is disposed along an arc centered on the second rotating shaft, and the second driving force transmission mechanism transmits the rotational driving force of the second driving force source to the outer circumference face of the second rotating member, so the structure of the second driving force transmission mechanism is simplified, which is suitable for miniaturization of the image-taking device.

With the third and fourth aspects, the image-taking lens may be stored in the interior of the second rotating member. The second rotating member may comprise a generally spherical outer face, and an opening for opening the optical axis direction of the image-taking lens. Further, a shutter may be provided for opening and shutting the opening of the second rotating member.

Any of the above-described aspects may further comprise an image sensor disposed facing the image-taking lens, a subject detecting device for detecting the position of a subject based on image information from the image sensor, and a control device for adjusting the angle of the image-taking lens by controlling the first and second driving units based on position information from the subject detecting device.

With the above-described configuration, a subject is imaged on the image sensor via the image-taking lens, and the image information thereof is output to the subject detecting device. The subject detecting device detects the position of a subject based on image information of the image sensor. The control device adjusts the angle of the image-taking lens by controlling the first and second driving units based on position information from the subject detecting device. More specifically, the subject detecting device computes the positional deviation from the position of the subject in the screen taken by the image sensor to the center of the screen based on image information of the image sensor, and detects this positional deviation as position information. Thus, the angle of the image-taking lens is adjusted so that the subject is situated near the center of the screen taken by the image sensor, enabling so-called automated tracking.

Any of the above-described aspects may further comprise an image sensor disposed facing the image-taking lens, a third driving unit for moving the image-taking lens in the optical axis direction thereof, a subject detecting device for detecting the distance to a subject based on image information from the image sensor; and a control unit for controlling the third driving unit to focus the image-taking lens based on information from the subject detecting device.

With the above-described configuration, the subject detecting device detects the distance to a subject based on image information from the image sensor, and the control unit controls the third driving unit to focus the image-taking lens based on information from the subject detecting device, so the image-taking lens can be automatically focused.

Any of the above-described aspects may further comprise a position detecting sensor fixed to the base, for detecting the position of a subject, and a control device for adjusting the angle of the image-taking lens by controlling the first and second driving units based on position information from the position detecting sensor.

With the above-described configuration, the control device adjusts the angle of the image-taking lens by controlling the first and second driving units based on position information from the position detecting sensor, so the image-taking lens can be automatically adjusted to be directed toward the subject.

Any of the above-described aspects may further comprise a controller for performing external driving operations of the first and second driving units.

With the above-described configuration, the first and second driving units are driven and operated according to input information from the controller, so the image-taking lens can be arbitrarily adjusted to be directed in a desired direction.

According to a fifth aspect of the present invention, an image-taking device comprises: a base; a rotating member for sectioning a generally spherical interior space, the rotating member comprising an opening for opening the interior space; a rotating shaft relatively rotatably linking the base and the rotating member; an image-taking lens disposed within the rotating member; a mirror member supported within the rotating member so as to tilt, for reflecting incident light from the opening of the rotating member and guide the light to the image-taking lens; a first driving unit for rotationally driving the rotating member; and a second driving unit for driving the tilting of the mirror member.

With the fifth aspect, the rotating member is rotationally driven by the first driving unit, and the mirror member is driven by the second driving unit so as to tilt, whereby the direction of the incident light guided to the image-taking lens can be set to a desired direction. That is to say, subjects in various locations can be taken without changing the optical axis direction of the image-taking lens, and accordingly, an image-taking device with a small size and a simple structure can be obtained.

Also, in the fifth aspect, the rotating member may further comprise a shutter for opening and shutting the opening.

The invention will now be described by way of example with reference to the accompanying drawings, throughout which like parts are referred to by like references, and in which:
Fig. 1 is an external perspective view of the main unit of the image-taking device according to a first embodiment of the present invention;
Fig. 2 is a cross-sectional diagram of the principal portions of the image-taking device shown in Fig. 1;
Fig. 3 is a block configuration diagram of the image-taking device according to the first embodiment;
Fig. 4 is a block configuration diagram of an entertainment device applied as an external input device,
Fig. 5 is an external perspective view of the image-taking device according to a second embodiment of the present invention;
Fig. 6 is a cross-sectional diagram of the principal portions of the image-taking device shown in Fig. 5;
Fig. 7 is an external perspective view of the image-taking device according to a third embodiment of the present invention;
Fig. 8 is a cross-sectional diagram of the principal portions of the image-taking device shown in Fig. 7;
Fig. 9 is an external perspective view of the image-taking device according to a fourth embodiment of the present invention,
Fig. 10 is a cross-sectional diagram of the principal portions of the image-taking device shown in Fig. 9;
Fig 11 is an external perspective view of the image-taking device according to a fifth embodiment of the present invention;
Fig. 12 is a cross-sectional diagram of the principal portions of the image-taking device shown in Fig. 11;
Fig. 13 is an external perspective view of the image-taking device according to a sixth embodiment of the present invention; and
Fig. 14 is a cross-sectional diagram of the principal portions of the image-taking device shown in Fig. 13.

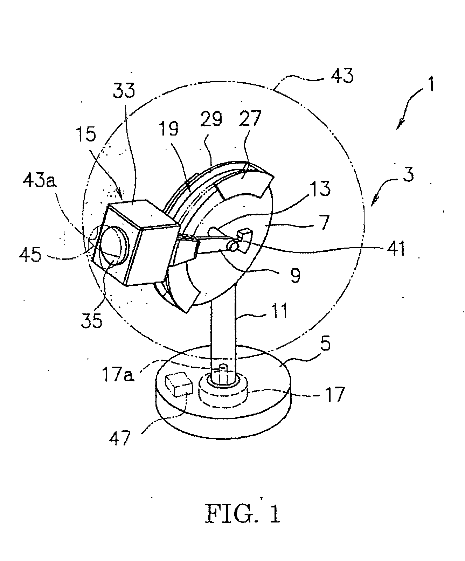

The following is a description of embodiments of the present invention, with reference to the drawings. Note that the references to "up" and "down" in the following description is with regard to the vertical directions in Fig. 1 and Figs. 5 through 14.

### First Embodiment

### [Configuration of the image-taking device main unit]

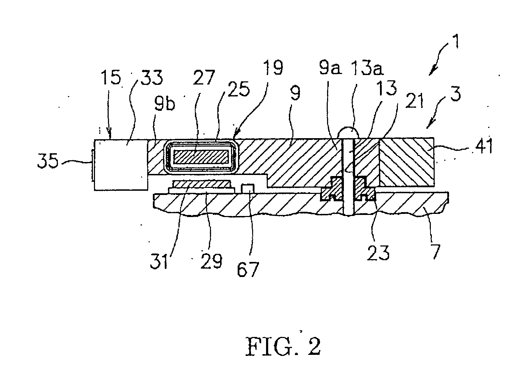

Fig. 1 is an external perspective view of the main unit of the image-taking device according to a first embodiment of the present invention, and Fig. 2 is a cross-sectional diagram of the principal portions of the image-taking device shown in Fig. 1.

As shown in Fig. 1, the main unit 3 of the image-taking device 1 comprises a base 5, a supporting plate 7 making up the first rotating member, an arm 9 making up the second rotating member, a first rotating shaft 11 relatively rotatably linking the base 5 and the supporting plate 7, a second rotating shaft 13 relatively rotatably linking the supporting plate 7 and the arm 9, a camera 15, a spindle motor 17 serving as a first driving unit, a VCM (Voice Coil Motor) 19 serving as a second driving unit (electromagnetic linear actuator), and a cover 43.

The base 5 is formed as a generally circular plate. The spindle motor 17 is contained and fixed within the base 5, and a driving shafts 17a of the spindle motor 17 extends upwards from approximately the center portion of the upper face of the base 5. A rod-shaped first rotating shaft 11 integrally extends upwards from the driving shaft 17a, and the upper end of the first rotating shaft is fixed to the lower edge of the supporting plate 7. That is, the first rotating shaft 11 and supporting plate 7 rotate along with the driving shaft 17a of the spindle motor 17.

As shown in Figs. 1 and 2, the supporting plate 7 is formed as a generally circular plate. The rod-shaped second rotating shaft 13 disposed on and across an extended line (virtual line) of the axial center of the first rotating shaft 11, is fixed to the supporting plate 7, and extends generally parallel to a plane perpendicular to the first rotating shaft 11 from the side face of the supporting plate 7. A shaft insertion hole 21 is formed to one end 9a of the arm 9, and the second rotating shaft 13 is inserted through the shaft insertion hole 21, whereby the arm 9 is rotatably supported by the supporting plate 7. An oil damper 23 is disposed between the supporting plate 7 and the arm 9, so that the vibration of the arm 9 is absorbed. An enlarged portion 13a is provided at the tip of the second rotating shaft 13, to prevent the arm 9 from falling out of the second rotating shaft 13.

The VCM 19 comprises a coil 25 fixed to an intermediate portion of the arm 9, a first yoke 27 and a second yoke 29 fixed to the supporting plate 7, and a magnet 31 fixed on the second yoke 29. The coil 25 has a hollow portion which extends in a direction generally orthogonal to a plane following the arm 9 and containing the axial center of the second rotating shaft 13. The second yoke 29 has an arc-shaped plate form with the second rotating shaft 13 as the center of the arc, disposed facing the outer face of the coil 25 along the movement path of the coil 25 on the side face of the supporting plate. The first yoke 27 has an arc-shaped plate form with the second rotating shaft 13 as the center of the arc, disposed facing the second yoke 29, and inserted through the whole portion of the coil 25. The first and second yokes 27 and 29 are formed of a magnetic material, with the upper and lower ends thereof joined together. The magnet 31 is made up of S poles and N poles alternately arrayed at predetermined angles, positioned so as to face the outer face of the coil 25. Controlling the driving current to the coil 25 causes the magnetic flux occurring in the coil 25 to interact with the magnetic field of the magnet 31. The thrust generated by this interaction causes the arm 9 to rotate upon the second rotating shaft 13.

The displacement sensor 67 configured of a photo-diode is fixed on the side face of the supporting plate 7. The displacement sensor 67 is disposed so as to face the arm 9, and detects displacement of the arm 9 as to the supporting plate 7.

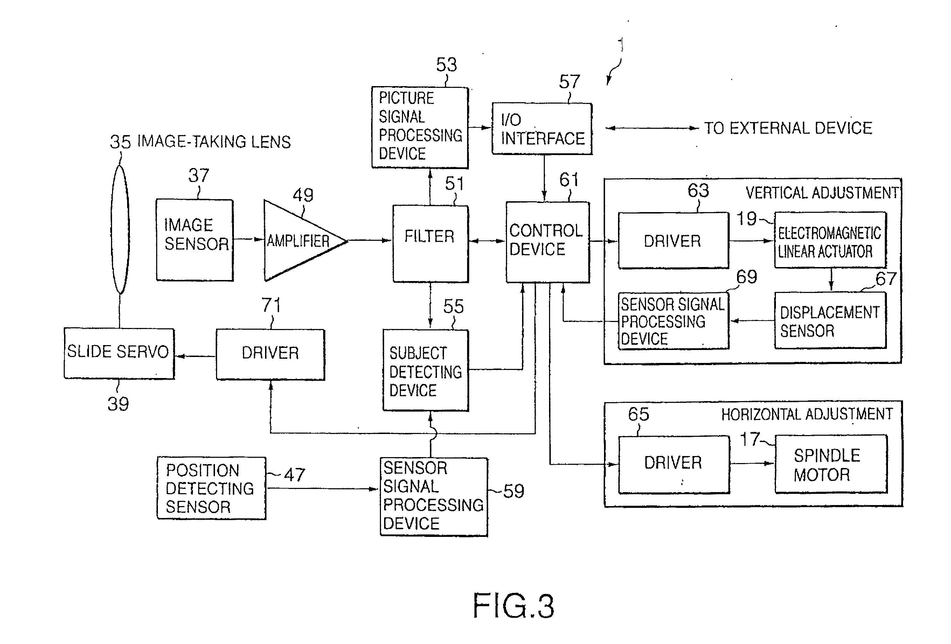

The camera 15 comprises a lens holder 33 having a lens barrel (omitted in the drawings) therein, an image-taking lens 35, a later-described image sensor 37 (shown in Fig. 3), and a slide servo 39 serving as a later-described third driving unit. The image-taking lens 35, the image sensor 37, and the slide servo 39 are supported by a holder 33. The lens holder 33 is attached to the other end 9b of the arm 9. The direction of the optical axis of the image-taking lens 35 is set in a desired direction by the rotational movement of the supporting plate 7 around the first rotating shaft 11 and the rotational movement of the arm 9 around the second rotating shaft 13. A balance weight 41 extending in the direction opposite to the camera 15 is fixed to the one end 9a of the arm 9.

As shown in Fig. 1, the cover 43 has a generally spherical outer face, is fixed to the supporting plate 7, and covers the supporting plate 7, arm 9, second rotating shaft 13, and lens holder 33. The cover 43 has an opening 43a for opening the optical axis direction of the image-taking lens 35, and a shutter 45 for opening and closing this opening 43a. When the image-taking device 1 is used, i.e., the position detecting sensor 47, for example, detects a subject, the shutter 45 is driven to opens the opening 43a.

A position detecting sensor 47 for detecting the position of the subject is fixed to the base 5. An audio sensor for detecting sound, or an optical sensor for detecting light, or the like, are used as the position detecting sensor 47, for example. The position detecting sensor 47 is set so as to be capable of detecting the subject in almost all 360 degrees, centered on the first rotating shaft 11.

### [Overall configuration of the image-taking device]

Fig. 3 is a block configuration diagram of the image-taking device according to the first embodiment.

The image sensor 37 is, for example, a CCD (solid-state image sensor or charge coupled device), and is disposed near the imaging position of the image-taking lens 35. The image sensor 37 scans the image of the subject imaged on the photo-receiving face thereof, converts this into electric signals for each of the pixels which are arrayed in the matrix, and outputs this as image data signals (image information) relating to contrast of the image.

The slide servo 39 slidably supports the image-taking lens 35 so as to move it along the optical axis thereof. Thus, the image-taking lens 35 is set at the desired position, either near to or far from the image sensor 37.

Image data signals output from the image sensor 37 are amplified by an amplifier 49, and are output to a picture signal processing device 53 and subject detecting device 55 via a filter 51. Filtering based on the waveform of the image data signals is performed at the filter 51. The undulations of the waveforms of the image data signals are proportionate to the focal state of the image-taking lens 35. The picture signal processing device 53 generates image signals to make up the screen from the input image data signals, and outputs the image signals to an external monitor device or the like via an I/O interface 57.

The position detecting sensor 47 detects position information of the subject (e.g., the direction of the subject), and output signals of the position information to the subject detecting device 55, via a sensor signal processing device 59. At the subject detecting device 55, positional information of the subject (e.g., direction) is calculated from the signals input from the position detecting sensor 47 via the sensor signal processing device 59, and also the distance between the subject and image-taking lens 35 is calculated from the image data signals input from the image sensor 37 via the amplifier 49 and the filter 51. Further, within the screen taken by the image sensor 37, positional deviation from the position of the subject to the center of the screen is calculated by the subject detecting device 55. These computation values are each output to control device 61 as signals relating to positional information.

The control device 61 outputs control signals to the electromagnetic linear actuator (VCM) 19, spindle motor 17, and/or slide servo 39, via the drivers 63, 65, and 71, based on the position information input from the subject detecting device 55. The drivers 63, 65, and 71 generate driving control signals for the electromagnetic linear actuator 19, the spindle motor 17, and the slide servo 39, based on signals from the control device 61.

The displacement sensor 67 detects displacement of the arm 9 as to the supporting plate 7 (both shown in Fig. 2), that is, displacement of the image-taking lens 35 along the vertical direction, and outputs signals relating to the displacement to the control device 61 via the sensor signal processing device 69. In this way, the position information of the image-taking lens 35 in the vertical direction is always fed back to the control device 61, and a control device 61 outputs control signals to the electromagnetic linear actuator (VCM) 19 via the driver 63, based on the information from the displacement sensor 67.

### [Configuration of external input device]

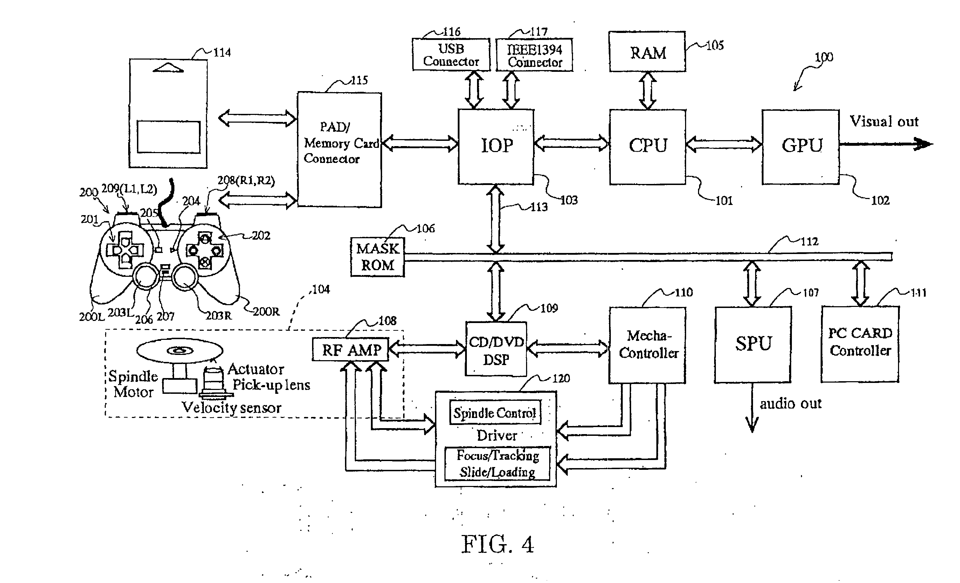

Fig 4 is a block configuration diagram of an entertainment device applied as an external input device.

The entertainment device 100 has a basic configuration comprising a main CPU 101 for performing signal processing and control of internal components based on various programs, a graphic processing unit (GPU) 102 for performing image processing, an IO processor (IOP) 103 for performing interface processing between the outside and inside of the device, and processing for maintaining lower-order compatibility, an optical disk reproducing unit 104 for reproducing optical disks such as DVDs or CDs or the like storing application programs and multimedia data, main memory 105 having functions as a work area for the main CPU 101 and a buffer for temporarily storing data read out from the optical disks, MASK-ROM 106 for storing operating system programs primarily executed by the main CPU 101 or the IOP 103, and a sound processor unit (SPU) 107 for performing audio signal processing.

Also, the entertainment device 100 has a CD/DVD digital signal processor (DSP) 109 for subjecting the reproduced output from a CD or DVD supplied via the RF amplifier 108 of the optical disk reproducing unit 104 to, for example, error correction processing (CIRC (Cross Interleaved Reed-Solomon Code) processing), or performing expanding and demodulating processing or the like on the data that is compressed and encoded, so as to reproduce the data, a driver 120 and mechanical controller 110 for performing rotational control of a spindle motor of the optical disk reproducing unit 104, focus/tracking control of the optical pick-up, loading control of the disk tray, and so forth, and a card-type connector (PC card slot) 111 for connecting, for example, communication cards, external hard disk drives, and so forth.

These components are mutually connected, primarily through bus lines 112, 113, and so forth. Also, the main CPU 101 and the GPU 102 are connected with the dedicated bus, and the main CPU 101 and the IOP 103 are connected by an SBUS. The IOP 103 and CD/DVD-DSP 109, MASK-ROM 106, SPU 107, and card-type connector 111 are connected by an SSBUS.

The main CPU 101 controls all operations of the entertainment device 100 by executing the operating system programs for the main CPU that are stored in the MASK-ROM 106. The CPU 101 also controls various actions of the entertainment device 100 by executing various types of application programs and the like that are, for example, read out from optical disks such as CD-ROMs or DVD-ROMs or the like and loaded to the main memory 105, or downloaded via communication networks.

The IOP 103 executes operating system programs for the IO processor stored in the MASK-ROM 106, thereby controlling data input/output with a PAD/memory card controller 115 which controls exchange of signals with the controller 200 and memory card 114, input/output of data with a USB connection terminal 116, input/output with an IEEE 1394 connection terminal 117, data input/output with the PC card slot 111, and also performs data protocol conversion and the like for these. The MASK-ROM 106 is also capable of storing device IDs for the controller 200 connected to a controller port (not shown in the drawings), the memory card 114 connected to a memory card slot (not shown) a PC card connected to the card type connector (PC card slot) 111, and so forth, with the IOP 103 performing communication with the devices such as the controller 200 and memory card and the like, based on the device IDs.

Upon the electric power being turned on to the entertainment device 100, the operating system programs for the main CPU and operating system programs for the IO processor are respectively read out from the MASK-ROM 106, and the corresponding operating system programs are executed by the main CPU 101 and the IOP 103. Accordingly, the main CPU 101 centrally controls the components of this entertainment device 100. Also, the IOP 103 controls the input and output of signals with the controller 200, memory card 114, and the like. Also, upon executing the operating system program and performing initialization processing such as confirming operations and so forth, the main CPU 101 controls the optical disk reproducing unit 104 to read out application programs stored in optical disks, which are loaded to the main memory 105, following which the application programs are executed. By executing the application programs, the main CPU 101 controls the GPU 102 and SPU 107, and controls displaying of images and generating of effects sounds and music, according to instructions from the user accepted from the controller 200 via the IOP 103.

With the present embodiment, the optical disk stores an application program for manually operating the image-taking device 1 (see Fig. 3), and executing this application program outputs user instructions input to the controller 200, to the image-taking device 1.

The I/O interface 57 of the image-taking device 1 shown in Fig. 3 is connected to the USB connection terminal 116 of the entertainment device 100 via a USB cable (not shown in the drawings). Manual operation of the image-taking device 1 is performed with regard to the controller 200, and the signals thereof are input to the control device 61 from the I/O interface 57 of the image-taking device 1 as shown in Fig. 3, via the PAD/memory card controller 115, IOP 103, and USB connection terminal 116.

Note that the image information obtained from the image-taking device 1 can be used with the entertainment device 100, as well. In this case, the image signals output from the image signal processing device 53 (shown in Fig. 3) of the image-taking device 1 are input from the USB connection terminal 116 of the entertainment device 100 to the IOP 103, via the I/O interface 57 (shown in Fig. 3).

Also, the electric power for the image-taking device 1 may be supplied separately and independently, or may be supplied from the entertainment device 100.

### [Configuration of the controller]

The controller 200 is operated by a operators (users) primarily for executing video games, but may also be used to input information for manual operating of the image-taking device 1.

The controller 200 has a left gripping portion 200 L which is gripped so as to be contained in the palm of the left hand of the operator (user), a right gripping portion 200R which is gripped so as to be contained in the palm of the right hand, a left operating portion 201 and right operating portion 202 which are operated by the thumbs on the left and right hands, in a state that these gripping portions 200L and 200R are gripped by the left and right hands of the user, a left analog operating portion 203L and the right analog operating portion 203R are capable of analog operations (joystick operations) by the same left and right thumbs, two left pressing buttons 209 (L1 and L2) operated by pressing operations made by, for example, the index finger and middle finger of the left hand of the user, and two right pressing buttons 208 (R1 and R2) operated by pressing operations made by, for example, the index finger and middle finger of the right hand of the user.

There are "up", "down", "left", and "right" direction keys provided on the left operating portion 201. These "up", "down", "left", and "right" direction keys are capable of not only instructing vertical and horizontal directions, but are also capable of instructing diagonal directions, such as simultaneously pressing the " up " direction key and " right " direction key, for example, giving directional instructions for the upper right direction. This holds for the other direction keys as well, such as simultaneously pressing the "down" direction key and "left" direction key giving directional instructions for the lower left direction.

The right operating portion 202 has four instructing buttons to which different functions are appropriated depending on the application program, these being "triangle", "square", "cross", and "circle" buttons, marked with a triangle, a square, a cross, and a circle, respectively.

When the left analog operating portion 203L and right analog operating portion 203R are not tilted, they are in an erected state, and this position is maintained as a reference position. When tilted, coordinate values on an X-Y coordinate system are detected according to the amount and direction of inclination thereof as to the above referenced position, and the coordinate values are sent to the entertainment device 100 as operating output. Also the left analog operating portion 203L or the right analog operating portion 203R are capable of realizing the same functions as the "up", "down", "left", and "right" direction keys.

Further, the controller 200 has a mode selecting switch 206 for selecting operating modes to activate the functions of the left and right operating portions 201 and 202 and the left and right analog operating portions 203L and 203R (i.e., setting to the analog operating mode) or deactivation thereof (setting to the digital operating mode), a light display portion 207 for causing the user to recognize the operating mode thus selected, by lighting LEDs (light-emitting diodes) or the like, a start button 204 instructing starting, pausing, etc., of execution of applications, a selector button 205 for performing instructions or the like for displaying menu displays, operating panels, software keyboard mode windows, etc., on the screen of a television monitor device (not shown in the drawings), and so forth. Note that in the event that the analog operating mode is selected by the mode selecting switch 206, the light display portion 207 is controlled so as to be lit and the left and right analog operating portions 203L and 203R are activated, all in the event that the digital operating mode is selected, the light display portion 207 is controlled so as to turn off, and the left and right analog operating portions 203L and 203R are deactivated.

With the present embodiment, of the four instructing buttons on the right operating portion 202, i.e., the "triangle", "square", "cross", and "circle" buttons, the manual mode for the image-taking device 1 is appropriated to the "circle" button, and the auto mode is appropriated to the "cross" button. Upon the "circle" button being pressed, signals instructing the manual mode are emitted to the control device 61 of the image-taking device 1 via the IOP 103 of the entertainment device 100, and upon the "cross" button being pressed, signals instructing the auto mode are emitted to the control device 61 of the image-taking device 1 via the IOP 103 of the entertainment device 100.

Also, functions for manually adjusting the focus of the image-taking lens 35 (shown in Fig. 3) are appropriated to the left analog operating unit 203L, and functions for manually changing the direction of the image-taking lens 35 (shown in Fig. 3) are appropriated to the right analog operating unit 203R. Specifically, with the left analog operating portion 203L, in the event that the operating portion 203L is tilted forwards (in the direction away from the operator), the image-taking lens 35 is distanced from the image sensor 37, and in the event of tilting backwards (in the direction toward the operator), the image-taking lens 35 is come closer to the image sensor 37. Also, with the right analog operating portion 203R, in the event that the operating portion 203R is tilted forwards (in the direction away from the operator), the image-taking lens 35 faces upwards, in the event of tilting backwards (in the direction toward the operator), the image-taking lens 35 faces downwards, in the event of tilting to the left, faces the left, and in the event of tilting to the right, faces the right. Control signals corresponding to these operations are emitted to the control device 61 of the image-taking device 1, via the IOP 103 of the entertainment device 100. Note that the appropriation of functions to the buttons and keys are only an example, and the present invention is by no means restricted to the above example.

### [Description of actions in the auto mode]

### (Initial settings)

When in the auto mode, the subject detecting device 55 calculates positional information of the subject, based on detection signals from the position detecting sensor 47, and outputs the positional information to the control device 61. Position information in this case contains at least information whereby the direction of the subject can be determined. The control device 61 drives and controls the electromagnetic linear actuator 19 and/or the spindle motor 17 via the drivers 63 and 65, based on positional information from the subject detecting device 55, such that the image-taking lens 35 is set at a position whereby the subject can be at least taken. Thus, the image-taking lens 35 is set in the initial position. In the event that the position detecting sensor 47 is capable of detecting information relating to the distance to the subject, the subject detecting device 55 calculates the distance to the subject, and the control device 61 drives and controls the slide servo 39 via the driver 71 based on this distance, so that the imaging position of the image-taking lens 35 is approximately matched with the photo-receiving face of the image sensor 37.

Following the image-taking lens 35 having been set to the initial position, the following auto-focusing control and tracking control are constantly executed.

### (Auto-focusing control)

Electric signals relating to the contrast to the image input from the image-taking lens 35 to the image sensor 37 are amplified by the amplifier 49 and output to the filter 51. At the filter 51, filtering is performed based on the waveform of electric signals from amplifier 49, and the waveform information thereof is output to the subject detecting device 55. At the subject detecting device 55, the distance between the image-taking lens 35 and the subject is calculated based on the input waveforms information, and the results are output as signals to the control device 61. At the control device 61, the slide servo 39 is driven and controlled via the driver 71 such that the imaging position of the image-taking lens 35 matches the photo-receiving face of the image sensor 37, i.e., so that the image-taking lens 35 is focused.

### (Tracking control)

The subject detecting device 55 recognizes the target subject in the screen being taken, based on the electric signals of the image being taken by the image sensor 37, detects the position thereof, calculates the positional deviation from the position of the subject in the image to the center of the screen, and outputs the computation values of these to the control device 61 as signals relating to positional information. The control device 61 drives and controls the electromagnetic linear actuator (VCM) 19 and/or the spindle motor 17 via the drivers 63 and 65, based on the positional information input from the subject detecting device 55, so that the subject is situated near the center of the screen. Also, feedback control is made for the electromagnetic linear actuator 19, based on detection signals from the displacement sensor 67.

Note that the method for performing tracking control is not restricted to the above, and an arrangement may be made wherein positional information for the subject is calculated based on electrical signals relating to the color or concentration in shade, for example, of the image being taken by the image sensor 37. For example, in the event that the color of a person's face is relatively light, positioning may be made based on the concentration of edges on the image sensor 37. Specifically, in the event that an image signal with higher concentration than a predetermined threshold value is output at the left side edge of the image sensor 37, judgment is made that an image using the color of the face as the discernment factor at the left edge is contained within the range of focus (within a range wherein difference between the imaging position of the image-taking lens 35 and the photo-receiving face of the image sensor 37 is permissible), and no positional adjustment of the image-taking lens 35 in the horizontal direction is necessary. Conversely, in the event that image signals that are as light as or lighter than the threshold value are output, this means that positional adjustment of the image-taking lens 35 in the horizontal direction is necessary, so the control device 61 performs driving control of the spindle motor 17.

### [Description of operations in manual mode]

Upon the left and right analog operating portions 203L and 203R of the controller 200 being operated, control signals corresponding to these operations are emitted to the control device 61 of image-taking device 1 via the IOP 103 of the entertainment device 100. The control device 61 drives and controls the electromagnetic linear actuator (VCM) 19, spindle motor 17, and/or slide servo 39 via the drivers 63, 65, and 71, based on control signals from the controller 200.

### [Advantages of the present embodiment]

With the present embodiment the supporting plate 7 is rotationally driven by the spindle motor 17, so adjustment of the optical axis direction of the image-taking lens 35 in the horizontal direction is performed, and the arm 9 is rotationally driven by the electromagnetic linear actuator 19, so adjustment of the optical axis direction of the image-taking lens 35 in the vertical direction is performed, and consequently, the optical axis direction of the image-taking lens 35 is set in the desired direction.

The second rotating shaft 13 is disposed on and across an extended line of the axial center of the first rotating shaft 11, so mechanical precision is more readily ensured as compared to arrangements wherein the second rotating shaft 13 is not on an extended line of the axial center of the first rotating shaft 11. In other words, with an arrangement wherein the second rotating shaft 13 is disposed on an extended line of the axial center of the first rotating shaft 11, the degree of effect which the margin of error in assembling the second rotating shaft 13 to the axial center of the first rotating shaft 11 has on the optical axis direction of the image-taking lens 35 can be suppressed to a smaller level as compared to an arrangement otherwise. Accordingly, an image-taking device 1 with high mechanical precision at the time of changing the optical axis direction of the image-taking lens 35 is provided, thereby improving the precision of adjusting the optical axis direction of the image-taking lens 35.

The second driving unit is configured of the electromagnetic linear actuator 19, so an image-taking device 1 that is suitable for miniaturization can be provided.

The second rotating member is configured of the arm 9, so the structure of the second rotating member and the electromagnetic actuator is simplified, and the overall structure of the image-taking device 1 is streamlined, and an image-taking device 1 which is suitable for miniaturization is obtained.

The spindle motor 17 is used as the first driving unit, and the first rotating shaft 11 is extended linearly from the driving shaft 17a of the spindle motor 17, so there is no need to provide a mechanism for transmitting driving force between the first driving unit and the first rotating shaft 11, and accordingly the structure is simplified, and an image-taking device 1 which is suitable for miniaturization is obtained.

The load on the electromagnetic linear actuator 19 is reduced by the balance weight 41, thereby facilitating miniaturization of the electromagnetic linear actuator 19.

The supporting plate 7, arm 9, the electromagnetic linear actuator 19, and camera 15 are unexposed at all times due to being covered by the cover 43, and the image-taking lens 35 is only exposed when the shutter 45 is opened. Accordingly, the external view of the image-taking device 1 is streamlined.

Moreover, in addition to the auto mode and manual mode described with the present embodiment, other modes may be set, such as, for example, a mode wherein only the auto focusing control of the auto mode is made to effectively function and the direction of the image-taking lens 35 is operated manually, a mode wherein only the auto tracking control of the auto mode is made to effectively function and the movement following the optical axis direction of the image-taking lens 35 is operated manually, and so forth.

### Second Embodiment

With the embodiment described below, the configuration of the main unit of the image-taking device differs from that of the first embodiment.

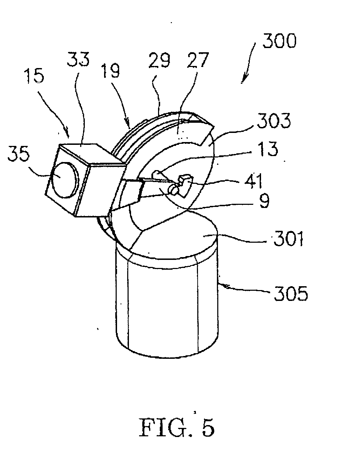

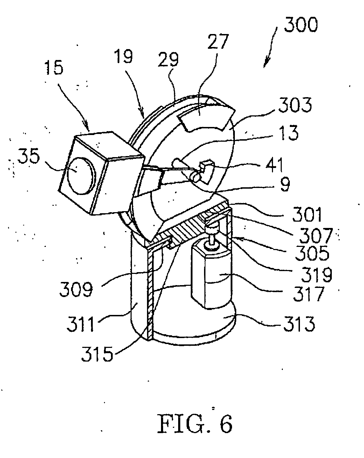

As shown in Figs. 5 and 6, the first rotating member of an image-taking device 300 relating to the present invention is configured of a base plate 301, and a supporting plate 303 erected from the base plate 301. As with the first embodiment, the supporting plate 303 supports the first yoke 27 and second yoke 29 and magnet (not shown), and also supports the arm 9 via the second rotating shaft 13.

The base 305 has an end wall 309 in a generally-circular shape, having a hole 307, a side wall 311 that is generally cylindrical in shape, extending from the edge of the end wall 309, and a base wall 313 for closing off the bottom of the side wall 311. The first rotating shaft 315 extends from approximately the center of the base face of the base plate 301, and is rotationally supported by the hole 307 of the base 305. In this state, the hole 307 of the base 305 is covered by the base plate 301.

A motor 317, and a driving gear 319 serving as a driving force transmission mechanism, are disposed on the inner side of the side wall 311 of the base 305. The driving gear 319 is fixed to the driving shaft of the motor 317, and meshes with a slave gear portion provided on the outer circumference of the first rotating shaft 315. The slave gear portion has an outer circumference that is greater than the inner circumference of the hole 307 of the base 305. The motor 317 is fixed to the base wall 313 of the base 305. The motor 317 and gear 319 make up the first driving unit.

Now, configurations which are the same as those in the first embodiment will be denoted with the same reference numerals, and description thereof will be omitted.

With the present embodiment, the base plate 301 and supporting plate 303 are rotationally driven by the motor 317, thereby adjusting the optical axis direction of the image-taking lens 35 in the horizontal direction, and the arm 9 is rotationally driven by the electromagnetic linear actuator 19, thereby adjusting the optical axis direction of the image-taking lens 35 in the vertical direction, and consequently, the optical axis direction of the image-taking lens 35 is set in the desired direction.

Also, the motor 317 and gear 319 are disposed on the inner side of the side wall 311 of the base 305, so the motor 317 and gear 319 are not exposed to the outside of the base 305, and the base plate 301 is provided so as to cover the hole 307 of the base 305, so the hole 307 and the first rotating shaft 315 are not exposed. Accordingly, the external view of the image-taking device 300 is streamlined.

Further, as with the first embodiment, the second rotating shaft 13 is disposed on and across an extended line of the axial center of the first rotating shaft 315, so precision in adjustment of the optical axis direction of the image-taking lens 35 improves.

The second driving unit is configured of an electromagnetic linear actuator 19, so an image-taking device 1 which is suitable for miniaturization can be obtained.

The second rotating member is configured of an arm 9, so the structure of the second rotating member and the electromagnetic actuator can be simplified, the overall structure of the image-taking device 1 is streamlined, and an image-taking device 1 which is suitable for miniaturization can be obtained.

The load on the electromagnetic linear actuator 19 is lessened by the balance weight 41, so the electromagnetic linear actuator 19 can be miniaturized.

### Third Embodiment

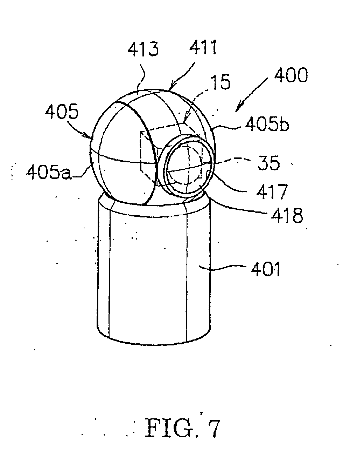

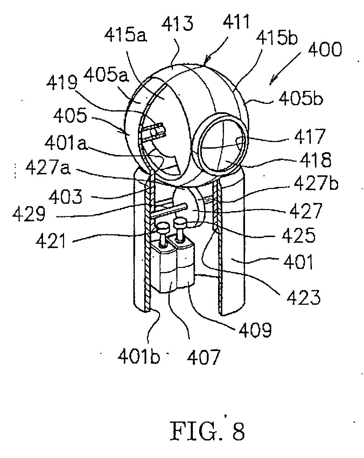

As shown in Figs. 7 and 8, a base 401 of an image-taking device 400 according to the present embodiment is formed having a generally-cylindrical shape, with openings 401a and 401b on either end. The first rotating shaft 403 is formed with a generally cylindrical shape which rotatably moves over the inner circumference of the base 401. The first rotating member 405 is configured of a pair of curved walls 405a and 405b extending from the upper end of the first rotating shaft 403 and facing one another, protruding from the opening 401a at the upper end of the base 401. The motor 407 serving as the first driving force source (first driving unit) and the motor 409 serving as the second driving force source (second driving unit), are both disposed and fixed within the base 401.

The external shape of the second rotating member 411 is a generally drum-shaped form having a curved outer circumference face 413 and two other outer faces 415a and 415b. A camera 15 having the image-taking lens 35 is mounted on the inside of the second rotating member 411. The second rotating member 411 has an opening 417 which is disposed on the outer circumference face 413 and is for opening the optical axis direction of the image-taking lens 35, and a shutter 418 for opening and closing the opening 417.

The second rotating member 411 has a second rotating shaft 419 protruding in the opposite direction from approximately the center of the outer faces 415a and 415b. The second rotating shaft 419 is disposed so as to be generally parallel to a plane perpendicular to the first rotating shaft 403 and generally perpendicular to the optical axis of the image-taking lens 35, and is rotatably supported at the inner faces of the curved walls 405a and 405b of the first rotating member 405, wherein each of the inner faces of the curved walls 405a and 405b are faced with each other.

In this state, the outer face of the curved walls 405a and 405b of the first rotating member 405 and the outer circumference face 413 of the second rotating member 411 together form a generally-spherical outer face. Also, the outer circumference face 413 of the second rotating member 411 is disposed along an arc with the second rotating shaft 419 as the center thereof, and partially faces the inside of the base 401 from the opening 401a.

A driving gear 421 is fixed to the driving shaft of the motor 407, and the driving gear 421 meshes with a slave gear portion 423 provided on the inner circumference face of the first rotating shaft 403. The rotational driving of the motor 407 is transmitted to the first rotating shaft 403 via the driving gear 421 and the slave gear portion 423. That is to say, the driving gear 421 and the slave gear portion 423 make up the first driving force transmitting mechanism (first driving unit).

A driving gear 425 is fixed to the driving shaft of the motor 409. The driving gear 425 meshes with a side face 427a of a slave gear 427 rotatably supported on the inner circumference face of the first rotating shaft 403 by a shaft 429. The shaft 429 is disposed generally parallel to the second rotating shaft 419. The outer circumference face 427b of the slave gear 427 is in contact with the outer circumference face 413 of the second rotating member 411 on the inside of the first rotating shaft 403, and the contact between these outer circumference faces 427b and 413 causes the second rotating member 411 to rotate along with the slave gear 427. Note that a sheet of rubber material or the like may be provided to at least one of the outer circumference faces 427b and 413 to increase the friction between the two, or intermeshing gears'may be provided to both outer circumference faces 427b and 413. Due to this configuration, the rotational driving of the motor 409 is transmitted to the second rotating member 411 via the driving gear 425 and the slave gear 427. That is, the driving gear 425 and slave gear 427 make up the second driving force transmitting mechanism (second driving unit).

The configurations which are the same as those in the first and second embodiments are denoted with the same reference numerals, and description thereof is omitted.

With the present embodiment, the first rotating member 405 is rotationally driven by the motor 407, thereby adjusting the optical axis direction of the image-taking lens 35 in the horizontal direction, and the second rotating member 413 is rotationally driven by the motor 409, thereby adjusting the optical axis direction of the image-taking lens 35 in the vertical direction, and consequently, the optical axis direction of the image-taking lens 35 is set in the desired direction.

Also, the second rotating member 411 has an outer circumference face 413 disposed along an arc with the second rotating shaft 419 as the center thereof, and the second driving force transmitting mechanism (slave gear 427) transmits the rotational driving of the motor 409 to the outer circumference face 413 of the second rotating member 411, so the structure of the second driving force transmitting mechanism is simplified, and an image-taking device 400 suitable for miniaturization can be obtained.

Also, the first rotating shaft 403, motors 407 and 409, and driving gears 421 and 425, and the slave gear 427 are disposed within the base 401 and are not exposed, so the external view of the image-taking device 400 is streamlined.

### Fourth Embodiment

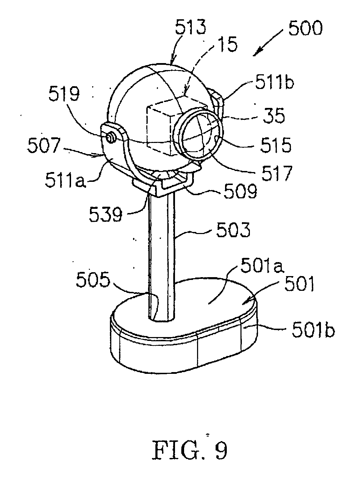

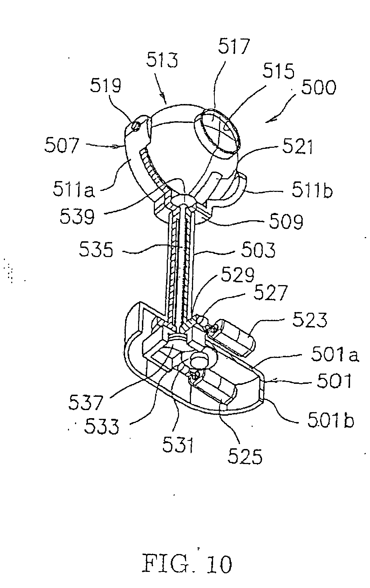

As shown in Figs. 9 and 10, the base 501 of the image-taking device 500 according to the present embodiment is configured of an upper wall 501a and a side wall 501b extending from the edge thereof A hole 505 is formed on the upper wall 501a of the base 501, and a cylindrical first driving shaft 503 is rotatably supported by the hole 505. A motor 523 serving as a first driving force source (first driving unit) and a motor 525 serving as a second driving force source (second driving unit) are disposed within the base 501 and fixed to the lower face of the upper wall 501a thereof.

The first rotating member 507 is formed as a generally U-shaped form, having a base plate 509 and side plates 511a and 511b extending in an opposing manner from both ends of base plate 509. The base plate 509 of the first rotating member 507 is fixed to the upper end of the first rotating shaft 503, and the side plates 511a and 511b extend upwards.

The outer shape of the second rotating member 513 is a generally spherical shape, and is positioned between the side plates 511a and 511b of the first rotating member 507. A camera 15 having the image-taking lens 35 is mounted within the second rotating member 513. The second rotating member 513 has and opening 515 for opening the optical axis direction of the image-taking lens 35, and a shutter 517 for opening and closing the opening 515.

The second rotating member 513 has a second rotating shaft 519 protruding from the outer face thereof. The second rotating shaft 519 is disposed generally parallel to perpendicular face as to the first rotating shaft 503, and generally perpendicular to the optical axis of the image-taking lens 35, and is rotatably supported by the side plates 511a and 511b of the first rotating member 507.

A rack gear 521 which is disposed along an arc having the second rotating shaft 519 as the center thereof is provided on the outer face of the second rotating member 513. The rack gear 521 moves above the base plate 509 of the first rotating member 507 in the event that the second rotating member 513 rotates with the second rotating shaft 519 as the center thereof.

A slave gear 529 formed of a bevel gear is integrally provided at the lower end of the first rotating shaft 503 protruding in the base 501. A driving gear 527 formed of a bevel gear is fixed to the driving shaft of the motor 523, and the driving gear 527 meshes with a slave gear portion 529 of the first rotating shaft 503. The rotational driving of a motor 523 is transmitted to the first rotating shaft 503 via the driving gear 527 and the slave gear 529. That is to say, the driving gear 527 and slave gear portion 529 make up the first driving force transmitting mechanism (first driving unit).

A driving gear 531 formed of a bevel gear is fixed to the driving shaft of the motor 525. A first slave gear 533 having a bevel gear shaped portion and a flat gear shaped portion is rotatably supported by the upper wall 501a of the base 501. The driving gear 531 meshes with the bevel gears shaped portion of the first slave gear 533. The flat gear shaped portion of the first slave gear 533 meshes with a second slave gear 537 provided on the lower end of the driving force transmitting shaft 535 inserted through the interior of the first driving shaft 503. A third slave gear 539 formed of a bevel gear disposed between the base plate 509 of the first rotating member 507 and the second rotating member 513, is fixed on the upper end of the driving force transmitting shaft 535. The third slave gear 539 meshes with the rack gear 521 of the second rotating member 513. According to this configuration, the rotational driving of the motor 525 is transmitted to the rack gear 521 of the second rotating member 513 via the driving gear 531, first slave gear 533, second slave gear 537, driving force transmitting shaft 535, and third slave gear 539. That is to say, the driving gear 531, slave gears 533, 537, and 539, and the driving force transmitting shaft 535 make up the second driving force transmitting mechanism (second driving unit).

Now, the configurations which are the same as those in the first through third embodiments will be denoted with the same reference numerals, and description thereof will be omitted.

With the present embodiment, the first rotating member 507 is rotationally driven by the motor 523, thereby adjusting the optical axis direction of the image-taking lens 35 in the horizontal direction, and the second rotating member 513 is rotationally driven by the motor 525, thereby adjusting the optical axis direction of the image-taking lens 35 in the vertical direction, and consequently, the optical axis direction of the image-taking lens 35 is set in the desired direction.

Also, the second rotating member 513 has a rack gear 521 disposed along an arc with the second rotating shaft 519 as the center thereof, and the second driving force transmitting mechanism (third slave gear 539) transmits the rotational driving of the motor 525 to the rack gear 521 of the second rotating member 513, so the structure of the second driving force transmitting mechanism is simplified, and an image-taking device 500 suitable for miniaturization can be obtained.

Also, the first rotating shaft 503 is formed having a cylindrical shape, and the driving force transmitting shaft 535 of the second driving force transmitting mechanism is inserted through the interior of the first rotating shaft 503 and is not exposed externally, so the external view of the image-taking device 500 is streamlined.

### Fifth Embodiment

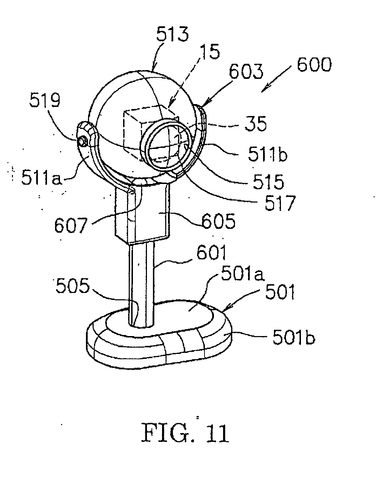

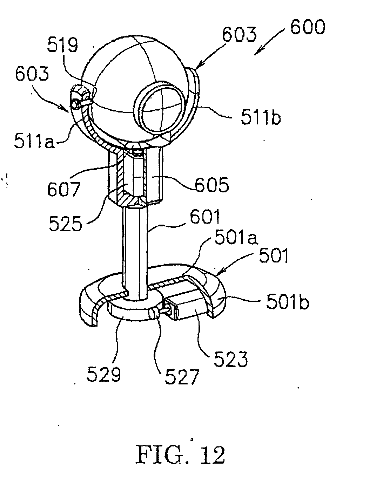

As shown in Figs. 11 and 12, the image-taking device 600 according to the present embodiment involves the motor 525 in the fourth embodiment being fixed to the first rotating member 603, instead of the driving force transmitting shaft 535. That is, the first rotating members 603 has a motor storing portion 605 which is fixed on the upper end of the first rotating shaft 601 and stores and holds the motor 525, and side plates 511a and 511b extending from the upper end of the motor storing portion 605. A driving gear 607 formed of a bevel gear serving as a second driving force transmitting mechanism (second driving unit) is fixed to the driving shaft of the motor 525, wherein a rack gear (not shown) the same as that in the fourth embodiment provided on the outer face of the second rotating member 513 meshes with the driving gear 607.

With the present embodiment, the first rotating member 603 is rotationally driven by the motor 523, thereby adjusting the optical axis direction of the image-taking lens 35 in the horizontal direction, and the second rotating member 513 is rotationally driven by the motor 525, thereby adjusting the optical axis direction of the image-taking lens 35 in the vertical direction, and consequently, the optical axis direction of the image-taking lens 35 is set in the desired direction.

Also, the second rotating member 513 has an outer rack gear (not shown) disposed along an arc with the second rotating shaft 519 as the center thereof, and the second driving force transmitting mechanism (driving gear 607) directly transmits the rotational driving of the motor 525 to the rack gear of the second rotating member 513, so the structure of the second driving force transmitting mechanism is simplified, and an image-taking device 600 suitable for miniaturization can be obtained.

### Sixth Embodiment

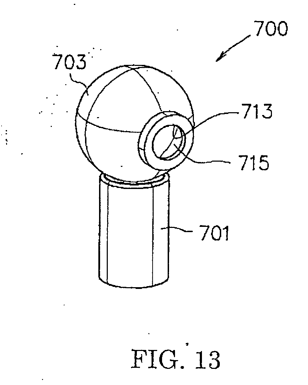

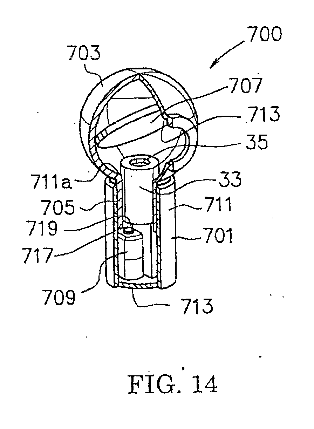

As shown in Figs. 13 and 14, the image-taking device 700 according to the present embodiment comprises a base 701, a rotating member 703, a rotating shaft 705, and image-taking lens 35, a generally circular mirror member 707, a motor 709 making up the first driving unit, and a motor (not shown) making up the second driving unit.

The base 701 is configured of a cylindrical side wall 711 having an opening 711a at the upper end thereof, and the base wall 713 for closing off the bottom of the side wall 711. The rotating shaft 705 is formed as a generally cylindrical shape which rotationally removes all along the inner circumference of the side wall 711 of the base 701. The rotating member 703 is configured of a curved wall which is fixed on the upper end of the rotating shaft 705 and forms a generally spherical outer face, and also sections the generally spherical interior space, and protrudes from the opening 711a at the upper end of the base 701. The rotating member 703 has an opening 713 for opening the interior space, and a shutter 715 for opening and closing the opening 713. The motor 709 serving as the first driving force source and the motor (not shown) serving as the second driving force source are both disposed and fixed within the base 701. The image-taking lens 35 is disposed within the rotating member 703, and is fixed to the inner circumference face of the rotating shaft 705 via a lens holder 33.

The mirror member 707 is supported so as to be capable of tilting along the interface of the rotating member 703. The mirror member 707 reflects the incident light from the opening 713 of the rotating member 703 and guides this light to the image-taking lens 35. A driving gear 717 making up the first driving unit is fixed to the driving shaft of the motor 709, and meshes with a slave gear portion 719 provided on the inner circumference face of the rotating shaft 705.

With the present embodiment, the direction of the opening 713 is changed by the rotating member 703 being rotationally driven by the motor 709, and the angle of the incident light to the image-taking lens 35 is changed primarily in the vertical direction by the mirror member 707 being tilted by the motor (not shown), and consequently the direction of the incident light to the image-taking lens 35 can be set to desired direction. That is to say, subjects in various positions can be taken without changing the optical axis direction of the image-taking lens 35, so image-taking device 700 with a small and simple structure can be obtained.

Also note that control by the auto mode and control by the manual mode can be applied to the image-taking devices according to the second through sixth embodiments, in the same manner as the first embodiment.

Also, the present invention is by no means restricted to the above embodiments that have been described as examples. That is, it is needless to say that besides the above-described embodiments, various changes and modifications may be made, according to design and the like, without departing from the scope of the present invention.

As described above, according to embodiments of the present invention, an image-taking device having a simple structure, and suitable for miniaturization, can be provided.

## Claims

1. An image-taking device, comprising:
a base;
a first rotating member;
a second rotating member;
a first rotating shaft linking said base and said first rotating member so as to be relatively rotatable;
a second rotating shaft disposed substantially parallel to a plane perpendicular as to said first rotating shaft and substantially across an extended line of the axial center of said first rotating shaft, said second rotating shaft linking said first rotating member and said second rotating member so as to be relatively rotatable;
an image-taking lens supported by said second rotating member;
a first driving unit for rotationally driving said first rotating member; and
a second driving unit for rotationally driving said second rotating member, said second driving unit having an electromagnetic actuator disposed between said first rotating member and said second rotating member.

2. The image-taking device according to Claim 1,
wherein said second rotating member comprises an arm having:
a one end linked to said second rotating shaft; and
an other end supporting said image-taking lens,
and wherein said electromagnetic actuator comprises:
a coil fixed to said arm and having a hollow portion extending in a direction substantially orthogonal to a plane containing the axial center of said second rotating shaft;
a first yoke fixed to said first rotating member and being inserted through said hollow portion of said coil;
a second yoke fixed to said first rotating member and being disposed so as to face the outer face of said coil following the path of motion of said coil; and
a magnet fixed on said second yoke so as to face the outer face of said coil.

3. The image-taking device according to Claim 2,
wherein said first rotating member comprises a supporting plate supporting said first yoke, said second yoke, and said magnet, as well as supporting said arm through said second rotating shaft,
and wherein said first driving unit comprises a spindle motor fixed to said base,
and wherein said first rotating shaft is extended linearly from the driving shaft of said spindle motor and is fixed to said supporting plate.

4. The image-taking device according to Claim 2;
wherein said first rotating member comprises a base plate and a supporting plate erected on said base plate,
and wherein said supporting plate supports said first yoke, said second yoke, and said magnet, as well as supports said arm through said second rotating shaft,
and wherein said base comprises an end wall having a hole, and a side wall extending from the edge of said end wall,
and wherein said first rotating shaft extends from said base plate and is rotatably supported by said hole in said base,
and wherein said first driving unit comprises a driving force source fixed to said base and a driving force transmission mechanism for transmitting the driving force rotations of said driving force source to said first rotating shaft,
and wherein said driving force source and said driving force transmission mechanism are disposed on the inner side of said side wall,
and wherein said base plate covers said hole of said base.

5. The image-taking device according to Claim 2, wherein said second rotating member further comprises a balance weight which is fixed to one end of said arm and extends toward the opposite side of said image-taking lens.

6. The image-taking device according to Claim 2, further comprising a cover fixed to said second rotating member and covering said first and second rotating members, said second rotating shaft, and said image-taking lens, said cover including:
an opening for opening the optical axis direction of said image-taking lens; and
a shutter for opening and shutting said opening.

7. An image-taking device, comprising:
a base formed in substantially cylindrical form and having an opening on at least one end thereof;
a first rotating member;
a second rotating member;
a first rotating shaft linking said base and said first rotating member so as to be relatively rotatable, said first rotating shaft being formed in substantially cylindrical form so as to be capable of rotationally moving along a inner circumference of said base;
a second rotating shaft disposed substantially parallel to a plane perpendicular as to said first rotating shaft, and linking said first rotating member and said second rotating member so as to be relatively rotatable;
an image-taking lens supported by said second rotating member;
a first driving unit for rotationally driving said first rotating member; and
a second driving unit for rotationally driving said second rotating member,
wherein said first rotating member extends from said first rotating shaft and protrudes from said opening of said base,
and wherein said first driving unit and said second driving unit are both disposed within said base.

8. The image-taking device according to Claim 7,
wherein said second rotating member comprises an outer circumference face which is disposed along an arc centered on said second rotating shaft and partially faces the inside of said base from said opening,
and wherein said first driving unit comprises a first driving force source fixed to said base, and a first driving force transmission mechanism for transmitting the driving force rotations of said first driving force source to said first rotating member,
and wherein said second driving unit comprises a second driving force source fixed to said base, and a second driving force transmission mechanism for transmitting the driving force rotations of said second driving force source to the outer circumference face of said second rotating member.

9. The image-taking device according to Claim 7, wherein said first rotating member and said second rotating member overall form a substantially spherical outer face.

10. An image-taking device, comprising:
a base;
a first rotating member;
a second rotating member including an outer circumference face;
a first rotating shaft fixed to said first rotating member and linking said base and said first rotating member so as to be relatively rotatable, said first rotating shaft being formed in substantially cylindrical form and being rotatably supported by said base;
a second rotating shaft disposed substantially parallel to a plane perpendicular as to said first rotating shaft, and linking said first rotating member and said second rotating member so as to be relatively rotatable;
an image-taking lens supported by said second rotating member;
a first driving unit for rotationally driving said first rotating member, said first driving unit including a first driving force source fixed to said base, and a first driving force transmission mechanism for transmitting the rotational driving force of said first driving force source to said first rotating shaft; and
a second driving unit for rotationally driving said second rotating member, said second driving unit including:
a second driving force source fixed to said base; and
a second driving force transmission mechanism for transmitting the rotational driving force of said second driving force source to said outer circumference face of said second rotating member, said second driving force transmission mechanism having a driving force transmission shaft inserted through the interior of said first rotating shaft,
wherein said outer circumference face of said second rotating member is disposed along an arc centered on said second rotating shaft.

11. An image-taking device, comprising:
a base;
a first rotating member;
a second rotating member including an outer circumference face;
a first rotating shaft rotatably supported by said base, fixed to said first rotating member, and linking said base and said first rotating member so as to be relatively rotatable;
a second rotating shaft disposed substantially parallel to a plane perpendicular as to said first rotating shaft, and linking said first rotating member and said second rotating member so as to be relatively rotatable;
an image-taking lens supported by said second rotating member;
a first driving unit for rotationally driving said first rotating member, said first driving unit including a first driving force source fixed to said base, and a first driving force transmission mechanism for transmitting the rotational driving force of said first driving force source to said first rotating shaft; and
a second driving unit for rotationally driving said second rotating member, said second driving unit including a second driving force source fixed to said first rotating member, and a second driving force transmission mechanism for transmitting the rotational driving force of said second driving force source to said outer circumference face of said second rotating member,
wherein said outer circumference face is disposed along an arc centered on said second rotating shaft.

12. The image-taking device according to either Claims 10 or 11,
wherein said image-taking lens is stored in the interior of said second rotating member,
and wherein said second rotating member includes a substantially spherical outer face and an opening for opening the optical axis direction of said image-taking lens.

13. The image-taking device according to Claim 12, wherein said second rotating member further includes a shutter for opening and shutting said opening.

14. The image-taking device according to any of the Claims 1, 7, 10, or 11, further comprising:
an image sensor disposed facing said image-taking lens and operable to output image information;
a subject detecting device operable to detect a position of a subject based on said image information from said image sensor and output position information; and
a control device operable to adjust an angle of said image-taking lens by controlling said first and second driving units based on said position information from said subject detecting device.

15. The image-taking device according to any of the Claims 1, 7, 10, or 11, further comprising:
an image sensor disposed facing said image-taking lens and operable to output image information;
a third driving unit for moving said image-taking lens in the optical axis direction thereof;
a subject detecting device operable to detect a distance to a subject based on said image information from said image sensor and output distance information; and
a control device operable to control said third driving unit to focus said image-taking lens based on said distance information from said subject detecting device.

16. The image-taking device according to any of the Claims 1, 7, 10, or 11, further comprising:
a position detecting sensor fixed to said base, said position detecting sensor being operable to detect a position of a subject and output position information; and
a control device operable to adjust an angle of said image-taking lens by controlling said first and second driving units based on said position information from said position detecting sensor.

17. The image-taking device according to any of the Claims 1, 7, 10, or 11, further comprising a controller operable by a user to perform external driving operations of said first and/or second driving units.

18. An image-taking device, comprising:
a base;
a rotating member sectioning substantially spherical interior space, said rotating member including an opening for opening said interior space;
a rotating shaft relatively rotatably linking said base and said rotating member;
an image-taking lens disposed within said rotating member;
a mirror member supported within said rotating member so as to be capable of being tilted, said mirror member being adapted to reflect incident light from the opening of said rotating member and guide said light to said image-taking lens;
a first driving unit for rotationally driving said rotating member; and
a second driving unit for driving the tilting of said mirror member.

19. The image-taking device according to Claim 18, wherein said rotating member further comprises a shutter for opening and shutting said opening.
